# EUROPÄISCHE PATENTSCHRIFT

(11) **EP 2 879 549 B1**
(45) Veröffentlichungstag und Bekanntmachung des Hinweises auf die Patenterteilung: **19.07.2017**
(21) Anmeldenummer: 13742239.0
(22) Anmeldetag: 30.07.2013
(51) Int. Cl.: A47C 20/04, F16H 25/20, H02K 7/06, H02K 7/116

(54) **ELEKTROMOTORISCHER MÖBELANTRIEB**
ELECTROMOTIVE FURNITURE DRIVE
ENTRAÎNEMENT ÉLECTROMOTEUR POUR UN MEUBLE

(30) Priorität: 02.08.2012 DE 102012107102
(43) Veröffentlichungstag der Anmeldung: 10.06.2015
(73) Patentinhaber: Dewertokin GmbH, 32278 Kirchlengern (DE)
(72) Erfinder: KLIMM, Hartmut, 32257 Bünde (DE)
(74) Vertreter: Kleine, Hubertus
(86) Internationale Anmeldenummer: PCT/EP2013/065991
(87) Internationale Veröffentlichungsnummer: WO 2014/020018

(56) Entgegenhaltungen:
- EP-A1- 1 900 309
- DE-A1- 19 920 672
- DE-U1- 20 302 142
- DE-U1- 29 811 566
- US-A- 5 176 353
- US-A1- 2007 051 047

## Beschreibung

Die Erfindung betrifft einen elektromotorischen Möbelantrieb mit einer Führungsbahn und einer sich entlang der Führungsbahn bewegenden und diese zumindest teilweise umgreifenden Abtriebseinheit.

Elektromotorische Möbelantriebe, im Folgenden abgekürzt auch als "Antriebe" bezeichnet, werden beispielsweise in Liege- und Sitzmöbeln eingebaut, um eine Verstellung von Möbelteilen wie Sitzen, Rückenlehnen, Fußbänken usw. relativ zu einem Grundkörper des Möbels und relativ zueinander komfortabel bewegen zu können.

Verstellbare Sitzmöbel insbesondere sog. Fernseh- oder Entspannungssessel, weisen dazu üblicherweise einen mechanisch relativ aufwändigen Möbelbeschlag auf, der im Zusammenwirken einer Vielzahl von Hebeln und Gestängen einen komplexen Bewegungsablauf der verschiedenen an ihm montierten Polstereinheiten der Möbel ermöglicht.

In der Druckschrift US 2011/01 98 894 A1 ist ein zur Verwendung in einem derartigen Sitzmöbelbeschlag geeigneter elektromotorischer Möbelantrieb beschrieben. Der Antrieb weist ein Grundelement auf, das in Sitzrichtung längs an einem Grundrahmen des Möbelbeschlags befestigt ist. Das Grundelement stellt eine Führungsbahn bereit, entlang der sich eine Abtriebseinheit des Antriebs bewegt. Die Abtriebseinheit führt gegenüber dem ortsfest am Antrieb angeordneten Motor eine lineare Verschiebebewegung aus, die über Schwenkhebel als eine kombinierte Verschiebe-/Drehbewegung auf eine Traverse des Sitzmöbelbeschlags übertragen wird. Die Bewegung des Antriebselements erfolgt über eine im Grundelement des Antriebs drehbar gelagerte und von einem Motor angetriebene Drehspindel. Nachteilig ist die relativ komplexe Ausgestaltung des Grundelements, das den Antriebsmotor, ggf. Getriebeelemente und die Drehspindel trägt. Für unterschiedliche Einsatzzwecke, beispielsweise zur Verwendung in unterschiedlichen Sitzmöbelbeschlägen, sind Grundelemente in verschiedenen Längen erforderlich, deren Bereitstellung aufgrund des komplexen Aufbaus des Grundelements kostenintensiv ist.
Zur Motorisierung von höhenverstellbaren Möbeln, insbesondere Tischen ist aus der Druckschrift DE 10 12 43 16 A1 eine höhenverstellbare Säule bekannt, bei der in einem Rohr ein Schlitten verschiebbar angeordnet ist. Ein Motor zur Bewegung des Schlittens verschiebt sich mit dem Schlitten innerhalb des Rohres. In dem Rohr sind dabei im Inneren zwei parallele Zahnstangen angeordnet, in die zwei am Schlitten drehbar gelagerte und vom Motor angetriebene Zahnräder eingreifen. Die Wandung der Rohre weist einen Längsschlitz auf, durch den Abtriebselemente zur Verbindung mit dem höhenverstellbaren Möbelteil an dem bewegten Schlitten festgelegt werden können. Auch an einem derartigen Möbelbeschlag ist nachteilig, dass das Rohr, das die Führungsbahn für das Abtriebselement bereitstellt, aufwändig gestaltet ist und da es den Motor aufnimmt, einen großen Durchmesser aufweist. Zudem ist das Antriebselement durch den Schlitz nur von einer Seite erreichbar. In Anwendungszwecken ist jedoch ein beidseitiger Anschluss von Verbindungselementen zum Möbelbeschlag an das Antriebselement erforderlich.

Der Druckschrift US 5 17 6353 zeigt einen elektromotorischen Antrieb für Sitze ohne Endschalter um die Bewegung des Abtriebs zu begrenzen.

Es ist daher eine Aufgabe der vorliegenden Erfindung, einen elektromotorischen Antrieb der eingangs genannten Art zu schaffen, der ein auf einfache Weise in seiner Länge anpassbare Grundeinheit aufweist und eine möglichst gut zugänglich entlang der Grundeinheit verfahrbare Abtriebseinheit aufweist sowie eine Bewegungsbegrenzung der Abtriebseinheit aufweist. Diese Aufgabe wird gelöst durch einen elektromotorischen Möbelantrieb mit den Merkmalen des unabhängigen Anspruchs. Vorteilhafte Ausgestaltungen und Weiterbildungen sind in den abhängigen Ansprüchen angegeben.

Ein erfindungsgemäßer elektromotorischer Möbelantrieb der eingangs genannten Art zeichnet sich dadurch aus, dass die Führungsbahn eine Zahnstange aufweist und die Abtriebseinheit einen Antriebsmotor mit einem Drehzahlreduziergetriebe und einem Abtriebszahnrad aufweist, das sich im Eingriff mit der Zahnstange der Führungsbahn befindet. Auf diese Weise wird ein Möbelantrieb geschaffen, der bei gleichem Aufbau der Abtriebseinheit leicht mit unterschiedlich langen Führungsbahnen und damit Verschiebewegen ausgestattet sein kann. Dadurch, dass die Führungsbahn wenigstens teilweise umgriffen wird, ist eine gute Führung gewährleistet. Die Abtriebseinheit liegt außerhalb der Führungsbahn und ist daher in ihrem Aufbau und ihrer Größe nicht durch die Ausgestaltung der Führungsbahn eingeschränkt. Weiterhin sind Endschalter vorgesehen, um eine Bewegung der Abtriebseinheit über die Enden der Führungsbahn hinaus zu verhindern. Zur Betätigung der Endschalter sind bevorzugt Schaltnocken an der Führungsbahn angeordnet. Dabei kann zumindest einer der Schaltnocken an einem entlang der Führungsbahn verschiebbaren Reiter angeordnet sein, wodurch sich die Endposition der Abtriebseinheit variabel einstellen lässt.

Bevorzugt umfasst die Führungsbahn ein Führungsprofil, das besonders bevorzugt eine insbesondere c-förmige Nut zur Aufnahme der Zahnstange aufweist. Die Zahnstange kann alternativ auch einstückig mit dem Führungsprofil ausgebildet sein.

In einer vorteilhaften Ausgestaltung des Möbelantriebs ist benachbart zur Zahnstange eine Laufbahn für ein Gegenlager ausgebildet, das das Abtriebszahnrad direkt oder indirekt lagert. Auf diese Weise können Verzahnungskräfte, die zwischen der Zahnstange und dem Antriebszahnrad wirken, unmittelbar in das Führungsprofil eingeleitet werden. Dazu kann die Zahnstange entlang einer Seite der Laufbahn verlaufen und eine Anlagekante für das Gegenlager kann an einer der Zahnstange gegenüberliegenden Seite der Laufbahn ausgebildet sein. Alternativ kann die Querschnittsform des Führungsprofils einen U-förmigen Abschnitt aufweisen, wobei die Zahnstange innerhalb des U-förmigen Abschnitts vorgesehen ist. Benachbart zur Zahnstange ist beispielsweise an einem freien Schenkel des U-förmigen Abschnitts in einer Ausführung eine Laufbahn vorgesehen.

In einer weiteren vorteilhaften Ausgestaltung des Möbelantriebs ist ein Lagerdorn, durch den das Abtriebszahnrad gelagert ist, an einem Gehäuse der Abtriebseinheit festgelegt. Der Lagerdorn kann dabei an einem Ende einstückig mit dem Gehäuse ausgebildet sein und am anderen Ende mit dem Gegenlager zusammenwirken, wodurch ein kompakter Aufbau der Abtriebseinheit mit wenigen Einzelelementen ermöglicht wird.

Wenn eine Gegenlagerung des Antriebszahnrads in der der Zahnstange benachbarten Laufbahn nicht erfolgt, kann alternativ der Lagerdorn an beiden Ende in dem Gehäuse der Abtriebseinheit festgelegt sein.

In einer weiteren vorteilhaften Ausgestaltung des Möbelantriebs weist die Abtriebseinheit an mindestens einer, bevorzugt zwei gegenüberliegenden Seiten, Befestigungsmittel zur Befestigung mit einem Möbelteil oder einem Teil eines Möbelbeschlags auf.

Als Drehzahlreduziergetriebe kann vorteilhaft ein Schneckengetriebe mit einer mit dem Antriebsmotor verbundenen Schnecke und einem mit dem Abtriebszahnrad verbundenen Schneckenrad vorgesehen sein. So wird eine hohe Untersetzung bei einfachem Aufbau und gleichzeitiger Selbsthemmung erzielt.

In einer weiteren vorteilhaften Ausgestaltung des Möbelantriebs sind zusätzlich zu den Endschalter Endanschläge vorgesehen, um eine Bewegung der Abtriebseinheit über die Enden der Führungsbahn hinaus zu verhindern.

Schließlich kann ein an den Möbelantrieb ansteckbares Teppichschutzschild vorgesehen sein, das den Möbelantrieb zumindest im Bereich eines Verschiebewegs der Abtriebseinheit nach unten hin abschirmt. Das Teppichschutzschild verhindert, dass Fäden eines langflorigen Teppichs in den Antriebsmechanismus gelangen können. Auch werden Schleifspuren der Abtriebseinheit bei einem sehr niedrig im Möbel angeordneten Möbelantrieb sowie in ein Abtropfen von Fett o.ä. aus dem Möbelantrieb verhindert.

Die Erfindung wird nachfolgend anhand von Ausführungsbeispielen mithilfe von Figuren näher erläutert. Es zeigen:
- Fig. 1a bis 1c: jeweils perspektivische Ansichten eines elektromotorischen Möbelantriebs in schematischen, teilweise geschnittenen Darstellungen;
- Fig. 2: eine weitere perspektivische Darstellung des elektromotorischen Möbelantriebs des ersten Ausführungsbeispiels;
- Fig. 3: eine weitere Schnitt- und Detaildarstellung des elektronischen Möbelantriebs des ersten Ausführungsbeispiels;
- Fig. 4a und 4b: weitere perspektivische Schnitt- und Detaildarstellungen des elektromotorischen Möbelantriebs des ersten Ausführungsbeispiels;
- Fig. 5a und 5b: perspektivische Darstellungen eines elektromotorischen Möbelantriebs in einem zweiten Ausführungsbeispiel;
- Fig. 6a bis 6c: verschiedene perspektivische und teilweise geschnittene Darstellungen des elektromotorischen Möbelantriebs im zweiten Ausführungsbeispiel;
- Fig. 7: eine perspektivische Darstellung der Führungsbahn des elektromotorischen Möbelantriebs im zweiten Ausführungsbeispiel und
- Fig. 8 bis 10: verschiedene perspektivische Darstellungen eines elektromotorischen Möbelantriebs in einem dritten Ausführungsbeispiel.

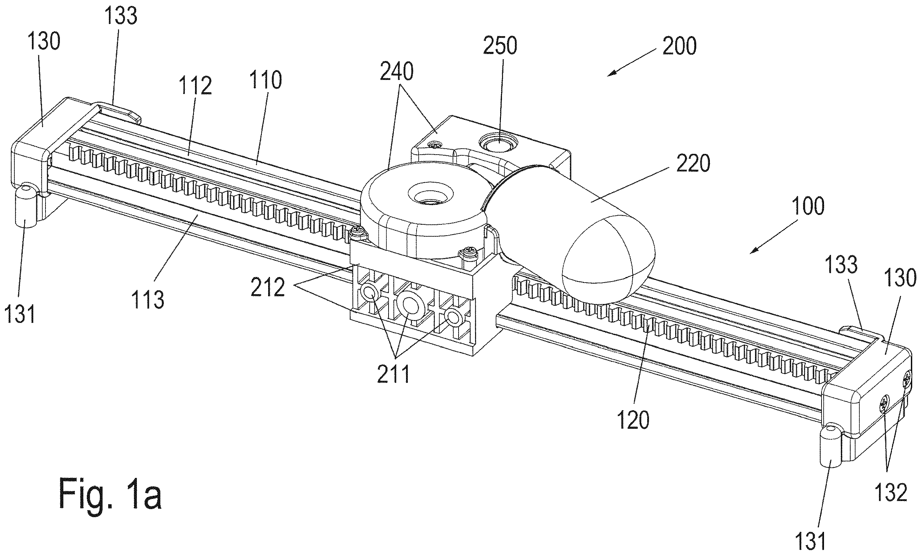

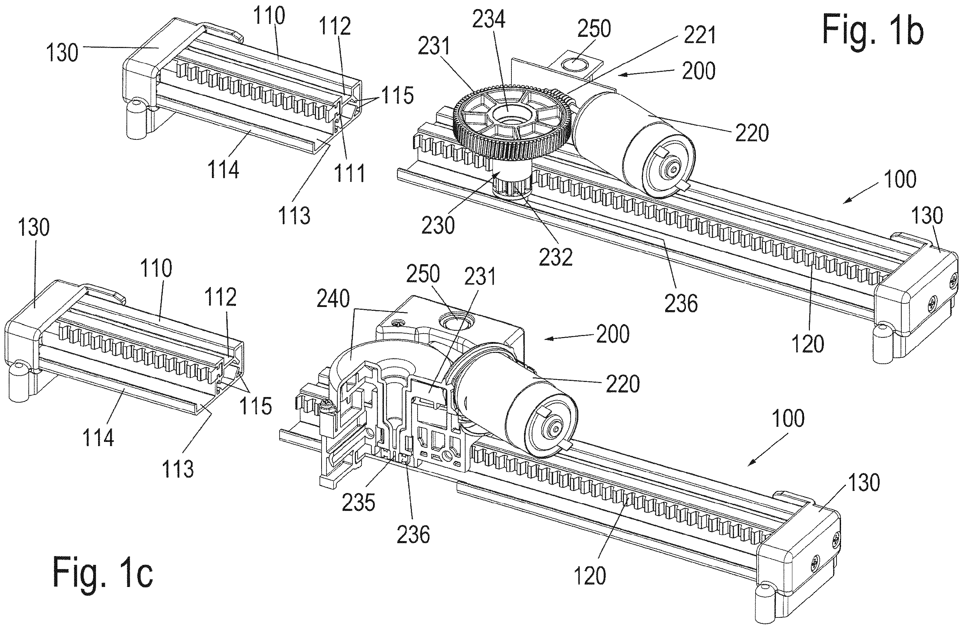

Fig. 1 a zeigt einen elektromotorischen Möbelantrieb in einer perspektivischen Darstellung. Der Möbelantrieb ist als Linearantrieb mit einer hier geraden Führungsbahn 100 ausgeführt, entlang der eine Abtriebseinheit 200 verfahren werden kann.

Die Führungsbahn 100 ist in dieser Ausgestaltung im Wesentlichen durch ein Führungsprofil 110 gebildet, das einen in etwa rechteckigen Querschnitt aufweist.

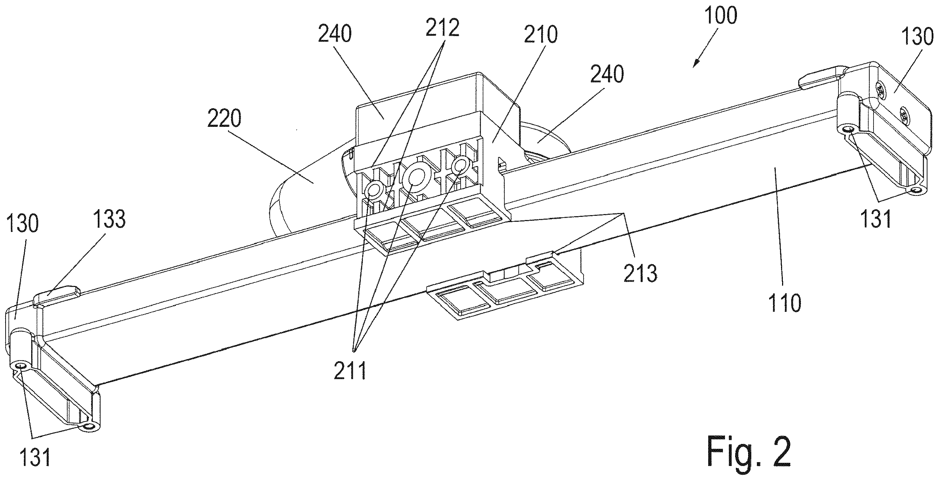

In den Fig. 1b und 1c ist der elektromotorische Antrieb der Fig. 1 a mit geschnittenem Führungsprofil 110 dargestellt. Zudem sind Elemente der Abtriebseinheit 200 entfernt (Fig. 1 b) bzw. geschnitten dargestellt (Fig. 1 c), um den inneren Aufbau der Abtriebseinheit 200 zu verdeutlichen. Fig. 2 zeigt die Unterseite des elektromotorischen Möbelantriebs in einer perspektivischen Ansicht.

Das Führungsprofil 110 ist bevorzugt ein Aluminiumprofil, es kann für bestimmte Anwendungen, in denen keine zu großen Verschiebekräfte von dem Antrieb aufgebracht oder keine zu großen Biegekräfte von dem Antrieb aufgenommen werden müssen, auch als Kunststoffprofil ausgebildet sein. Aus der Schnittdarstellung des Führungsprofils 110 ist ersichtlich, dass das Profil eine Nut 111 zur Aufnahme einer Zahnstange 120 aufweist. Die Nut 111 zur Aufnahme einer Zahnstange 120 ist C-förmig ausgeführt, wobei die Zahnstange 120 an ihrer der Zahnung entgegen gesetzten Seite ein entsprechendes komplementäres Profil aufweist, sodass die Zahnstange 120 in die Nut 111 eingeschoben werden kann. Die Zahnstange 120 kann mit einem entsprechenden Profil beispielsweise aus einem harten, widerstandsfähigen Kunststoff hergestellt sein. Es kann sich bei der Zahnstange 120 um ein extrudiertes Profil mit eingefräster Zahnung oder auch um ein als Ganzes im Spritzgussverfahren hergestelltes Element halten. Die Zahnstange 120 kann ein- oder auch mehrteilig ausgebildet sein. Insbesondere bei einem Möbelantrieb mit langen Verfahrwegen kann die Herstellung eines entsprechend langen einteiligen extrudierten Profils problematisch sein. In einem solchen Fall bietet sich eine mehrteilige Zahnstange 120 an.

Auf der in der Figur oben dargestellten Seite des Führungsprofils 110 ist zudem eine Führungsnut 112 ausgebildet. Angrenzend an die Nut 111 zur Aufnahme der Zahnstange 120 ist eine Laufbahn 113 für ein Gegenlager vorgesehen. Auf der der Zahnstange 120 gegenüber liegenden Seite ist die Laufbahn 113 mit einer parallel zur Nut 111 angeordneten Anlagekante 114 abgeschlossen. Die Funktion des Gegenlagers wird nachfolgend im Zusammenhang mit der detaillierteren Beschreibung der Abtriebseinheit 200 erläutert. Zusätzlich können, wie aus den Fig. 1b und 1c ersichtlich ist, innerhalb des Führungsprofils 110 Versteifungsrippen 115 ausgebildet sein.

Zu beiden Enden des Führungsprofils 110 ist dieses mit Befestigungsflanschen 130 abgedeckt. Die Befestigungsflansche 130 stellen Befestigungsmittel 131, hier in Form von Gewindebohrungen bereit. Über die Befestigungsmittel 131 kann die Führungsbahn 100 und damit der elektromotorische Antrieb am Möbel, beispielsweise am Möbelbeschlag, festgelegt werden. Die Befestigungsflansche 130 sind über Schrauben 132 oder anderen Befestigungsmittel mit dem Führungsprofil 110 verbunden. Die Schrauben 132 können beispielsweise selbstschneidende Schrauben sein, die in geeignete Kammern oder an geeignete Stege bzw. Wandungen des Führungsprofils 110 eingeschraubt bzw. angeschraubt werden. Derartige geeignete Kammern bzw. Stege sind beispielsweise durch die Versteifungsrippen 115 definiert. An den Befestigungsflanschen 130 sind zudem Schaltnocken 133 angeordnet, die mit in dieser Figur nicht sichtbaren und nachfolgend erläuterten Endschaltern zusammen wirken. Durch die Befestigungsflansche 130 ist auch die in das Führungsprofil 110 eingeschobene Zahnstange 120 festgelegt.

Die Abtriebseinheit 200 weist als Gehäuseteil und Grundelement einen Schieber 210 auf, der beispielsweise als Spritzgusskunststoffteil einstückig als ein in etwa C-förmiger Block ausgebildet ist, der das Führungsprofil 110 zumindest teilweise umgreift und in diesem Sinne an der Außenseite des Führungsprofils 110 entlang läuft. An der Unterseite des Schiebers 210 weist dieser Abschnitte 213 auf, die teilweise über die Unterseite des Führungsprofils 210 greifen und so verhindern, dass die Abtriebseinheit 200 nach oben von der Führungsbahn 100 abgenommen werden kann. Alternativ oder zusätzlich kann zu diesem Zweck auch z.B. die Führungsnut 112 als Schwalbenschwanz-Nut oder als Nut mit einem T-förmigen oder mit einem L-förmigen Querschnitt ausgeführt sein. Gemäß dieser alternativen oder zusätzlichen Ausführungsform zumindest eines Teilbereiches der Führungsbahn 100 weist diese somit ein Führungsprofil 110 auf, in das der Schieber 210 zumindest teilweise hineingreift.

In einer alternativen Ausbildung kann der Schieber 210 mehrteilig ausgeführt sein, wobei er aus wenigstens zwei Abschnitten besteht und zumindest ein Abschnitt als Führungsabschnitt zur Führung an dem Führungsprofil 110 ausgebildet ist, als Befestigungsabschnitt zur Befestigung über ein Befestigungsmittel 211,212 ausgebildet ist, als Aufnahmeabschnitt für das Getriebe ausgebildet ist, oder als Lagerungsabschnitt für Getriebebauteile wie Schnecke 221, wie Antriebswelle 230, wie Schneckenzahnrad 231, wie Abtriebszahnrad 232 ausgebildet ist.

Die Formgebung des Schiebers 210 an seinen dem Führungsprofil 110 zugewandten Fläche ist diesem entsprechend angepasst, sodass der Schieber 210 möglichst spielfrei bzw. mit einem geringen Spiel und bzgl. aller Achsen verdrehsicher entlang dem Führungsprofil 110 verschiebbar gelagert ist. An zumindest einer, bevorzugt zwei gegenüberliegenden Seiten des Schiebers 210, sind Befestigungsmittel 211 zur direkten oder indirekten Verbindung mit einem Möbelteil, beispielsweise einem Möbelbeschlag, vorhanden.

Vorliegend sind als Befestigungsmittel 211 drei Bohrungen vorgesehen, von denen mindestens eine, beispielsweise die größere zentrale Bohrung mit einem Gewinde versehen ist. Zudem sind zwei parallele und gegenüber den Bohrungen vorstehende Kanten als weitere Befestigungsmittel 212 vorgesehen. Zur Verbindung mit dem Möbel oder Möbelbeschlag kann beispielsweise eine mit einer zentralen Bohrung und zwei Zapfen versehenen Platte zwischen die weiteren Befestigungsmittel 211 eingesetzt werden, wobei die beiden Zapfen in die äußeren Bohrungen und der Befestigungsmittel 211 eingesteckt sind und in die mittlere Gewindebohrung der Befestigungsmittel 211 eine Schraube eingesetzt wird. Die Kanten als weitere Befestigungsmittel 212 verhindern zusätzlich zu dem eingesteckten Zapfen eine Verdrehung der eingesetzten Platte. Denkbar wäre auch z.B. ein Gelenk, welches mit dem Befestigungsmittel 211 an den Schieber 210 befestigt ist, oder ein Befestigungsmittel 211, welches ein Gelenk aufweist oder bildet. Selbstverständlich sind andere Befestigungsmittel als die hier dargestellten zur Verbindung des Schiebers 210 mit dem Möbel oder Möbelbeschlag möglich.

Zur Bewegung des Schiebers 210 ist ein Antriebsmotor 220 an dem Schieber 210 festgelegt. In der Fig. 1b sind für eine Kraftübertragung von dem Antriebsmotor 220 auf das Führungsprofil 110 benötigte Elemente freigelegt dargestellt. Auf einer Abtriebswelle des Motors 220 ist eine Schnecke 221 aufgesetzt. Es ist eine Antriebswelle 230 vorgesehen mit einem Schneckenzahnrad 231, das sich im Eingriff mit der Schnecke 221 befindet und das drehfest mit einem Abtriebszahnrad 232 verbunden ist, welches sich im Eingriff mit der Zahnstange 120 befindet. Die Antriebswelle 230 ist zumindest teilweise hohl, so dass zumindest im Bereich des Schneckenzahnrads 231, bevorzugt jedoch auch tiefer in die Antriebswelle hineinragend eine Lageraufnahme 234 ausgebildet ist, mit deren Hilfe die Antriebswelle 230 zumindest an ihrem in der Figur oberen Ende gelagert werden kann. Das Schneckenzahnrad 231 und das Antriebszahnrad 232 können dabei einteilig ausgebildet sein, oder aber auch separate Bauteile sein, die dann bevorzugt formschlüssig ineinander greifen.

Im hier gezeigten Ausführungsbeispiel ist die Antriebswelle 230 über ihre gesamte Länge hohl ausgebildet und ist über ihre gesamte Länge drehbar auf einen Lagerdorn aufgesetzt. Der Lagerdorn ist an einem Getriebegehäuse 240 festgelegt, das auf den Schieber 210 aufgeschraubt ist (vgl. Fig. 1a, 1c). Der Lagerdorn kann an dieser oberen Seite einstückig mit dem Getriebegehäuse 240 ausgebildet sein.

Der Schieber 210 und das Getriebegehäuse 240 bilden zusammen auch ein Gehäuse der Abtriebseinheit. Ebenso können sie gemeinsam als mehrteiliges Getriebegehäuse angesehen werden.

Am gegenüberliegenden unteren Ende, also benachbart zum Abtriebszahnrad 232, ragt der Lagerdorn aus der Antriebswelle 230 heraus. Der Lagerdorn weist an diesem unteren Ende einen Lagerzapfen 235 auf, der beispielsweise in Fig. 1c sichtbar ist. Dieser Lagerzapfen 235 ist in einem Gegenlager 236 gelagert, das in der zuvor beschriebene Laufbahn 213 läuft. Alternativ ist es möglich, dass die Antriebswelle 230 nicht über ihre gesamte Länge hohl ausgebildet ist und der Lagerdorn am unteren Ende nicht aus der Antriebswelle 230 herausragt. In diesem kann der Lagerzapfen an der Antriebswelle 230 ausgebildet sein und die Antriebswelle 230 an dieser Seite direkt in dem Gegenlager 236 gelagert sein.

Bei Betrieb des Motors 220 wird dessen Drehbewegung über die Schnecke 221 und das Schneckenzahnrad 231 untersetzt und ggf. selbsthemmend auf die Antriebswelle 230 übertragen. Das Zusammenspiel von dem Antriebszahnrad 232 und der Zahnstange 120 überträgt die Drehbewegung der Antriebswelle 230 in eine Linearbewegung des Schiebers 210 entlang des Führungsprofils 110. Um beim Eingriff der Schnecke 221 in das Schneckenzahnrad 231 und insbesondere beim Eingriff des Abtriebszahnrads 232 in die Zahnstange 120 auftretenden Kräfte (Verzahnungskräfte), die die Zahnung auseinander drücken würden, aufnehmen zu können, ist das Gegenlager 236 vorgesehen. Insbesondere große zwischen Abtriebszahnrad 232 und Zahnstange 120 auftretende Kräfte werden von dem Gegenlager 236 an der Anlagekante 114 des Führungsprofils 110 abgestützt. Vorliegend ist das Gegenlager 236 als ein Radialkugellager ausgebildet. Anstelle des dargestellten Radialkugellagers als Gegenlager 236 kann dieses auch eine Rolle oder ein in der Laufbahn 113 verschiebbarer Lagerklotz eingesetzt werden. Es ist auch denkbar, das Gegenlager 236 nicht unmittelbar in der Laufbahn 113 zu führen, sondern in dem Schieber 210 abzustützen, welcher sich wiederum an dem Führungsprofil 110 und/oder an der Zahnstange 120 abstützt.

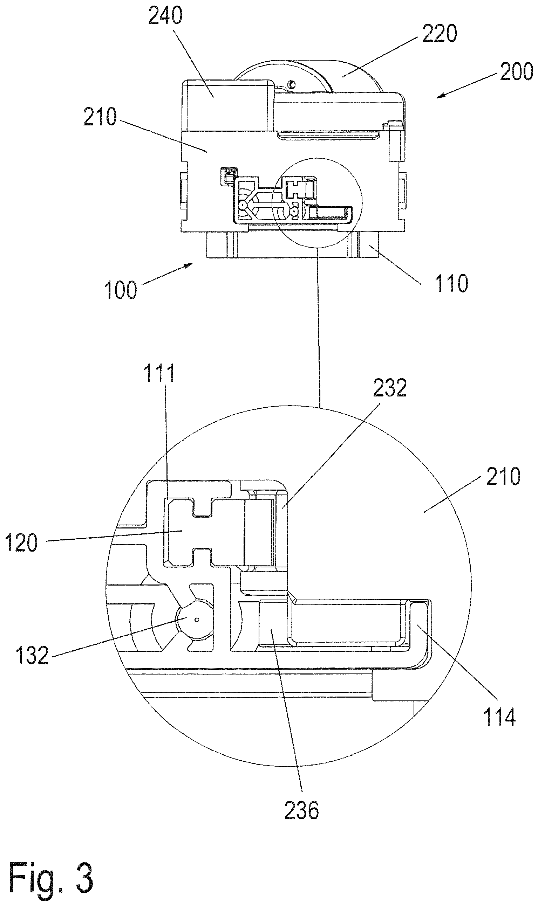

In Fig. 3 ist im oberen Bereich ein senkrecht zur Längsrichtung der Führungsbahn 100 ausgeführter Schnitt durch den elektromotorischen Antrieb dargestellt. In der Detailvergrößerung im unteren Bereich der Figur ist das sich an der Anlagekante 114 der Laufbahn 112 abstützende Gegenlager nochmals gut zu erkennen. Zudem zeigt diese Darstellung, wie sich das Gewinde der Schraube 132 des Befestigungsflansches 130 in die von den Versteifungsrippen 115 des Führungsprofils 110 gebildete Kammer einschneidet.

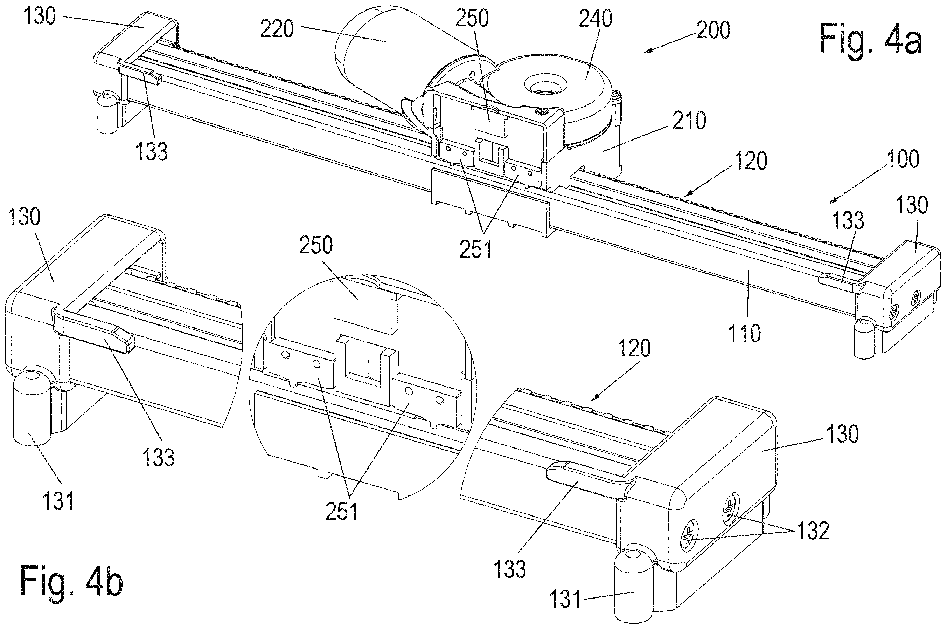

Fig. 4a zeigt eine weitere perspektivische und geschnittene Ansicht des elektromotorischen Antriebs der Fig. 1. Gegenüber der Darstellung der Fig. 1 ist hier eine Ansicht die die Zahnstange 120 der gegenüberliegenden Seite zeigt. Der der Schieber 210 ist geschnitten dargestellt. Unter der Oberseite des Getriebegehäuses 240 ist ein elektrischer Anschluss 250 angeordnet, über den der elektromotorische Antrieb mit Strom versorgt wird. Dieser elektrische Anschluss ist auch in den Figuren 1a bis 1c zu erkennen. Er kann als fester Kabelanschluß oder als Steckanschluß ausgebildet sein.

Weiter sind am Schieber 210 zwei Endschalter 251 angeordnet. Die Endschalter 251 können mechanische Schalter sein, wie beispielsweise Mikroschalter in dem dargestellten Ausführungsbeispiel. Alternativ ist es auch möglich, optische Schalter, beispielsweise Gabel- oder Reflexlichtschranken im Zusammenhang mit einer entsprechenden Steuerelektronik zu verwenden. Die Endschalter 251 sind so angeordnet, dass sie von dem jeweiligen Schaltnocken 133, die an dem Befestigungsflansch 130 am Ende des Führungsprofils 110 angeordnet sind, betätigt werden, wenn die Abtriebseinheit 200 in dem Endbereich des Führungsbereichs 110 fährt. Die Endschalter 251 sind so mit dem elektrischen Anschluss 251 und dem Antriebsmotor 220 elektrisch verbunden, sodass eine weitere Fahrt der Abtriebseinheit 200 in Richtung eines betätigten Endschalters 251 unterbunden ist. Vorzugsweise sind die zu diesem Zweck die Endschalter 251 in den Versorgungsstromkreis des Antriebsmotors 220 eingebracht und öffnen den Versorgungsstromkreis, wenn am jeweiligen Endbereich des Führungsprofils 110 bzw. der Führungsbahn 100 geschaltet werden.

Fig. 4b zeigt die Endschalter 251 und die mit ihnen zusammen wirkenden Schaltnocken 133 noch einmal in einer vergrößerten Detaildarstellung.

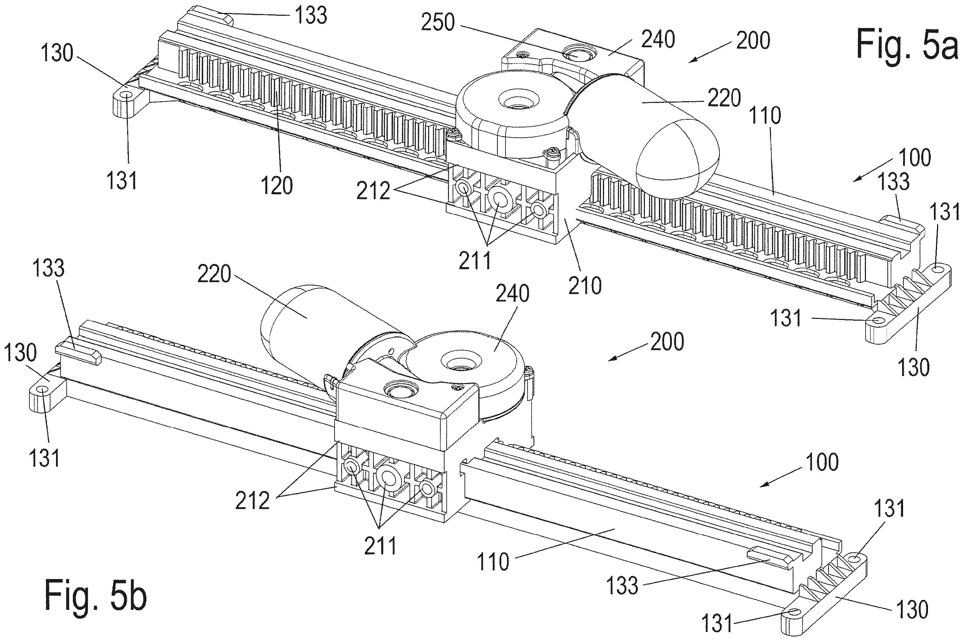

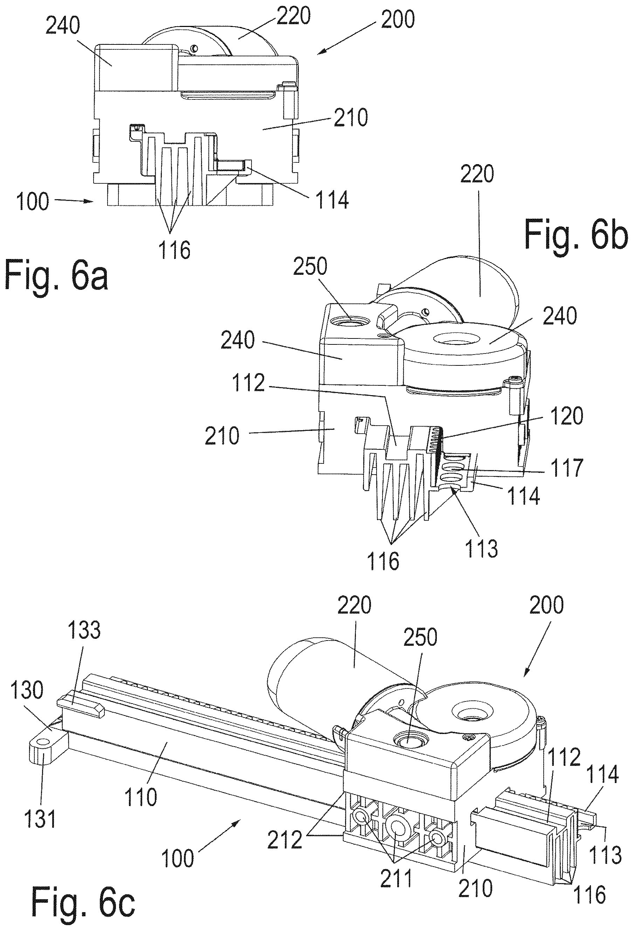

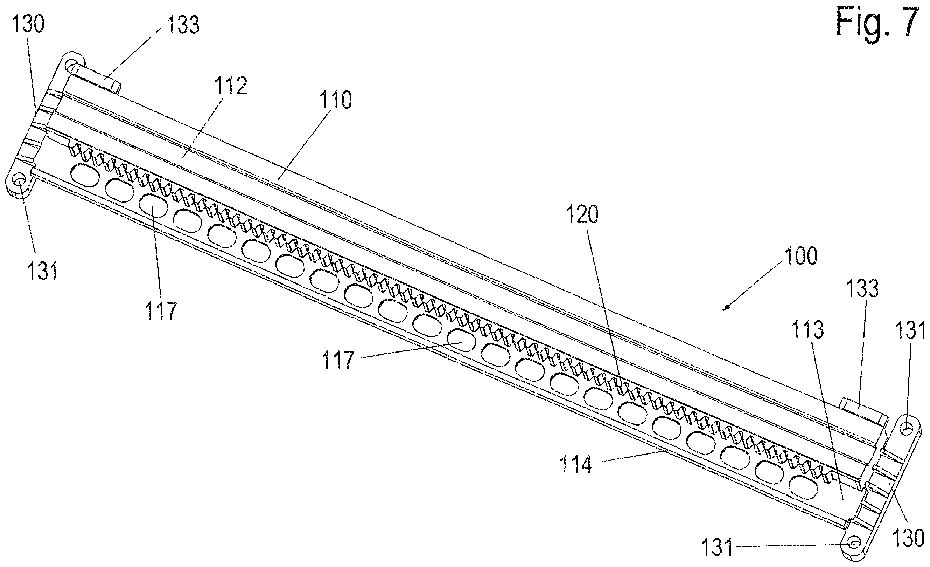

In den Fig. 5a und 5b sowie 6a bis 6c ist ein weiteres Ausführungsbeispiel eines elektromotorischen Antriebs dargestellt. Fig. 7 stellt ebenfalls perspektivisch das in diesem Ausführungsbeispiel verwendete Führungsprofil dar. Gleiche Bezugszeichen kennzeichnen in diesen Figuren gleiche bzw. gleichwirkende Elemente wie in den voranstehenden Figuren. Bzgl. des grundsätzlichen Aufbaus dieses elektromotorischen Möbelantriebs im zweiten Ausführungsbeispiel wird auf die Erläuterung des ersten Ausführungsbeispiels verwiesen.

Im Unterschied zum ersten Ausführungsbeispiel ist bei diesem Ausführungsbeispiel das Führungsprofil 110 einstückig mit der Zahnstange 120 ausgebildet. Ebenso ist in diesem Ausführungsbeispiel der Befestigungsflansch 130 einstückig mit dem Führungsprofil 110 ausgeführt. In einer möglichen Weiterbildung dieses Ausführungsbeispiels kann die Zahnstange 120 so ausgebildet sein, dass sie selbst das Führungsprofil 110 darstellt.

Bevorzugt ist die Führungsbahn 100 in einem Spritzgussprozess aus Kunststoff gefertigt. Anders als beim Führungsprofil 110 des ersten Ausführungsbeispiels sind vorliegend keine Hohlräume im Profil vorgesehen, um die Führungsbahn 100 einfacher im Spritzgussverfahren herstellen zu können. Zur Erhöhung der Stabilität sind im unteren Bereich Rippenstrukturen angeordnet. Diese sind hier als Längsrippen 116 ausgebildet. Ein weiterer Unterschied betrifft die Laufbahn 113 für das Gegenlager 236. Diese Laufbahn ist mit Stauböffnungen 117 versehen, durch den Staub, der beispielsweise aus Möbelpolstern auf den im inneren des Möbels angeordneten elektromotorischen Antrieb fällt, sich in der Laufbahn 113 ansammelt. Ein Eindringen von Staub in den Antriebsbereich innerhalb des Schiebers 210 wird somit verhindert oder zumindest verringert, wodurch die Gefahr eines Blockierens oder einer verstärkten Abnutzung der Antriebselemente verringert wird. Weiterhin kann gegen das Hineinfallen und Eindringen von Fremdkörpern oder Staub eine Abdeckung der Zahnstange 120 vorgesehen sein.

In beiden dargestellten Ausführungsbeispielen ist zur Drehzahlreduzierung zwischen dem Antriebsmotor 220 und dem Abtriebszahnrad 232 eine Getriebestufe durch die Schnecke 221 und das Schneckenrad 231 gebildet. Selbstverständlich sind andere Getriebearten, beispielsweise ein Planetengetriebe, ein Stirnradgetriebe oder ein Reibradgetriebe oder als Umlaufgetriebe möglich. Auch kann anstelle eines ein- ein mehrstufiges Getriebe eingesetzt werden.

Weiter ist denkbar, dass anstelle einer geraden Verzahnung zwischen Abtriebszahnrad und Zahnstange auch eine Schrägverzahnung eingesetzt werden kann. Ebenso ist eine Verzahnung nach Art eines abgewickelten Schneckenrades denkbar. Als Zahnstange und Verzahnung ist in diesem Sinne jegliche Konturierung zwischen einem sich entlang der Führungsbahn 110 erstreckenden Elements ("Zahnstange") und einem sich drehendem Abtriebselement ("Abtriebszahnrad") zu verstehen. Die Konturierung kann auf mikroskopischer Skala erfolgen, sodass auch ein Reibradantrieb denkbar ist.

In den dargestellten Ausführungsbeispielen ist die Führungsbahn 100 gerade ausgebildet. Es ist jedoch ebenfalls denkbar, die Führungsbahn 100 zumindest teilweise bogenförmig auszubilden. Beispielsweise kann die Führungsbahn 100 der Bewegung eines Krafteinleitungspunkts eines Möbelbauteils bzw. eines bewegten Teil des Möbelbeschlags, der mit dem elektromotorischen Antrieb verbunden ist, folgen. Zudem ist es möglich, dass die Führungsbahn 100 Teil des Möbelbeschlags selbst ist. Beispielsweise kann die Führungsbahn 100 ein an zumindest einer Seite mit einer Verzahnung versehener gerader oder bogenförmiger Schieber eines Möbelbeschlags sein.

Gemäß den zuvor gezeigten und beschriebenen Ausführungsformen sind Schieber 210 und Zahnstange 120 relativ zueinander geführt. Die Beschreibung dieser Anordnung läßt sich darauf reduziert erläutern, wobei das mit der Verzahnung der Zahnstange 120 in Wirkverbindung befindende Führungsprofil 110 zum Getriebeabtrieb bildende Abtriebszahnrad 232 geführt wird und die Führung oder das Führungsprofil 110 zumindest die Verzahnungskräfte der Zahnstangenverzahnung aufnimmt, so dass die Zahnstangenverzahnung im Eingriff bleibt. Ferner sind alternative Zahnstangeprofile nach Art einer Triebstockverzahnung ausgebildet. Ferner sind alternative Verzahnungen des Abtriebszahnrades 232 nach Art eines Kettenrades oder nach Art eines Triebstockrades ausgebildet. Wesentlich ist jedoch, dass damit ein als Zahnstangegetriebe wirkendes Lineargetriebe gebildet ist.

Aus den eingangs genannten Beschreibungen gehen die Lagerungen der einzelnen Getrieberäder hervor. Der besondere Aufbau von Getriebegehäuse 240 und Schieber 210 läßt jedoch eine besonders einfache Aufnahme und Montage der Getriebeglieder und des Gegenlagers 236 zu und ist nicht auf die dargestellten Ausführungen beschränkt. Somit können in alternativen Ausführungen die Lagerung der Schnecke 221, der Antriebswelle 230, des Schneckenzahnrades 231, des Abtriebszahnrades 232 teilweise oder vollständig im Getriebegehäuse 240 oder zumindest teilweise oder vollständig im Schieber 210 angeordnet sein. Ferner können Schnecke 221, Antriebswelle 230, Schneckenzahnrade 231, Abtriebszahnrad 232 teilweise oder vollständig vom Getriebegehäuse 240 und/oder teilweise oder vollständig vom Schieber 210 aufgenommen sein. Die vorgenannten Lager und Führungen sind als Gleitlager und als Gleitführung ausgebildet. Alternativ hierzu weisen jedoch zumindest ein Teil der Lager und Führungen Wälzlager beispielsweise in Form von Rillenkugellager auf.

Wie eingangs näher beschrieben erfolgt eine Abschaltung des Antriebsmotors 220 durch den Endschalter 251, der beispielsweise als Mikroschalter ausgebildet ist. Eine andere Art der Abschaltung weist einen reversiblen Schalter auf, welcher ebenfalls im Motorstromkreis angeordnet ist und durch ein Motorstromschwellwertschalters, z.B. ein Poly-Switch Bauteil, gebildet ist. Alternativ hierzu sind mechanische Endanschläge angeordnet, welche beispielsweise wie folgt gebildet sind: Ende der Verzahnung der Zahnstangenverzahnung; Hervorspringen eines Verzahnungsabschnittes der Zahnstange 120; durch den Befestigungsflansch 130, welcher über die Grenzen der Führungsbahn 100 hervor springt; Befestigungsschrauben des Möbelantriebs im Bereich des Befestigungsflansches 130. Es können ferner elektrische Endabschaltungen mit mechanischen Endanschlägen kombiniert sein.

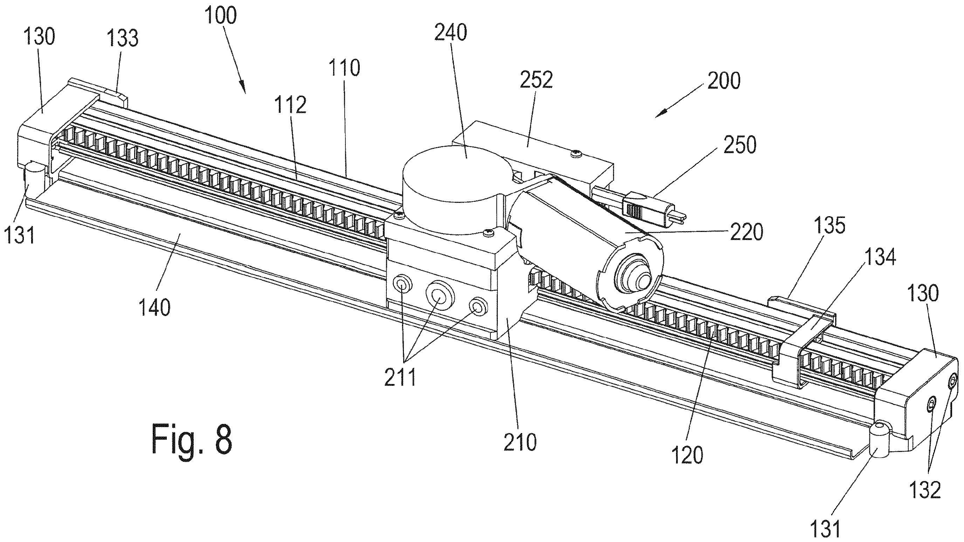

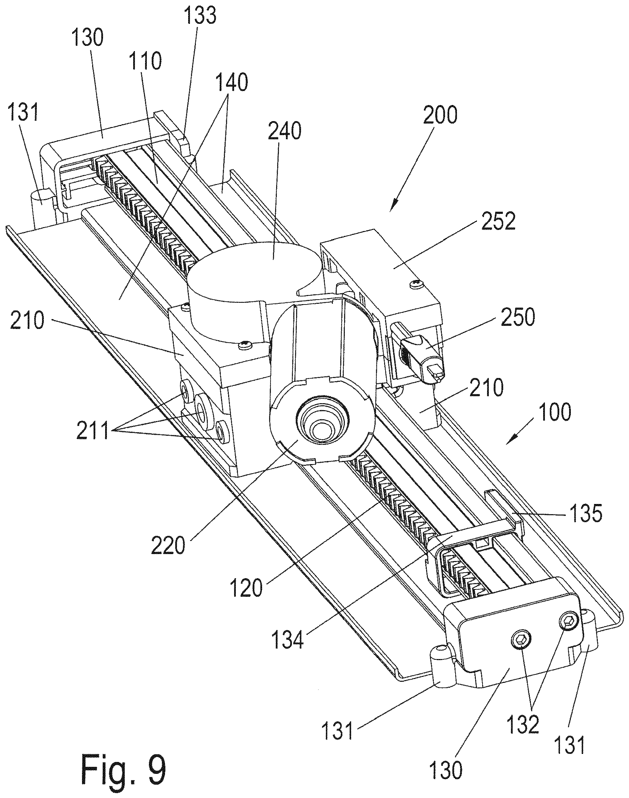

In den Fig. 8 bis 10 ist ein drittes Ausführungsbeispiel eines elektromotorischen Antriebs dargestellt. Auch in diesen Figuren kennzeichnen gleiche Bezugszeichen gleiche bzw. gleichwirkende Elemente wie in den voranstehenden Figuren. Bzgl. des grundsätzlichen Aufbaus dieses elektromotorischen Möbelantriebs im dritten Ausführungsbeispiel wird auf die Erläuterung des ersten Ausführungsbeispiels verwiesen.

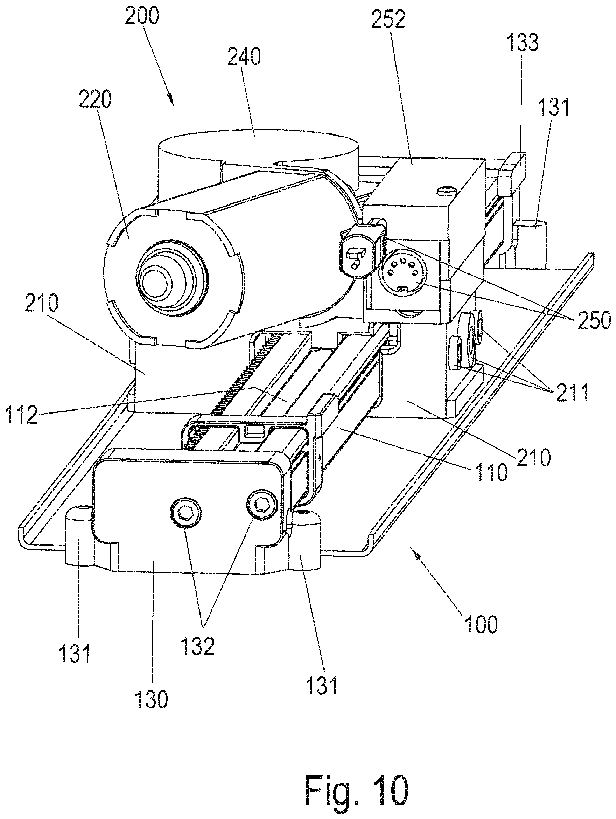

Im Unterschied zu dem ersten Ausführungsbeispiel weist das Führungsprofil 110 hier keine gesonderte Laufbahn für das Gegenlager am unteren Ende der hier nicht sichtbaren Antriebswelle auf. Vielmehr ist die Antriebswelle an ihren beiden Ende in dem Getriebegehäuse 210 gelagert. Damit wirken größere Verzahnungskräfte durch den Eingriff des Abtriebszahnrads (vgl. 232 der Fig. 1 b) in die Zahnstange 120, diese Kräfte werden von dem Getriebegehäuse 210 aufgenommen und auf der der Zahnstange 120 gegenüberliegenden Seite von dem Führungsprofil 110 aufgenommen. Insbesondere in Fig. 10 ist gut ersichtlich, wie das Getriebegehäuse 210 zu diesem Zweck das Führungsprofil 110 klammerartig umgreift. Mit der eingangs genannten Definition kann dieses auch so betrachtet werden, dass benachbart zur Zahnstange 120 eine Laufbahn für ein Gegenlager vorgesehen ist, wobei eine Seite des Führungsprofils 110 die Laufbahn darstellt. Gemäß der Ausführung nach Figur 10 ist wenigstens eine Laufbahn vorgesehen, welche glattflächig ausgebildet ist und sich in Längsrichtung des Führungsprofils 110 erstreckt.

Als Lager für die Antriebswelle können grundsätzlich Gleit- oder Kugellager Verwendung finden. Kugellager sind jedoch vorteilhaft, um Reibungsverluste möglichst gering zu halten und kleinere Antriebsmotoren 220 einsetzten zu können.

Das Getriebegehäuse 240 deckt bei diesem Ausführungsbeispiel nicht den gesamten Schieber 210 ab, sondern nur den Teil, in dem sich die mechanischen Antriebselemente befinden. Für den Bereich der elektrischen Anschlüsse 250 ist ein separater Anschlussdeckel 252 vorgesehen.

Ein weiterer Unterscheid betrifft den in Fig. 8 auf der rechten Seite angeordneten Schaltnocken für die Endschalterbetätigung. Dieser ist hier nicht an dem Befestigungsflansch montiert, sondern als verstellbarerer Schaltnocken 135 an einem entlang des Führungsprofils 110 verschiebbaren Reiter 134. Auf diese Weise kann die Endlage des Schiebers 210 an das jeweilige Möbel angepasst werden. Der Reiter 134 kann mit einem Fixiermittel versehen sein, beispielweise einer (Maden-) Schraube, um ihn in seiner gewünschten Position zu fixieren. Alternativ ist der Reiter 134 mit einer Klemmvorrichtung oder ferner als Klemmschelle ausgebildet, um den Schaltnocken 135 mit dem Führungsprofil 110 zu verbinden. Entgegen der Darstellungen der Figuren und alternativ kann wenigstens ein weiterer Reiter 134 vorgesehen sein, so dass eine Anzahl Reiter 134 mit Schaltnocken 135 an dem Führungsprofil 110 vorgesehen sind. Es sind die Schaltnocken 135, die am weitesten voneinander beabstandet angeordnet sind, zur Endlagenabschaltung vorgesehen. Es ist jeder Schaltnocke 135, welcher zwischen den zur Endlagenabschaltung vorgesehenen Schaltnocken 135 angeordnet ist, für einen Zwischenstopp oder für eine Zwischenposition vorgesehen. Je nach Ausführung kann der Schaltnocke 133, 135 einen Schalter betätigen oder einen Übertrager bewegen, welcher einen Schalter betätigt. Dabei weist die Antriebseinheit 200 wenigstens einen Schalter auf, dessen Schaltkontakt im Stromkreis des Antriebsmotors 220 eingebunden ist oder alternativ bei Betätigung ein Schaltsignal zu einer übergeordneten Steuerung gibt.

Weiter ist bei diesem Ausführungsbeispiel eine Teppichschutzschiene 140 unterhalb der Führungsschiene 110 angeordnet, die verhindert, dass Fäden eines langflorigen Teppichs zwischen Antriebszahnrad und Zahnstange 110 gelangen können. Auch werden Schleifspuren des Schiebers 210 bei einem sehr niedrig im Möbel angeordneten Möbelantrieb sowie in ein Abtropfen von Fett o.ä. aus dem Möbelantrieb verhindert. Die Teppichschutzschiene 140 wird bevorzugt an den Möbelantrieb angeklemmt oder aufgesteckt und kann somit leicht nachgerüstet werden. Alternativ ist die Teppichschutzschiene 140 mit dem elektromotorischen Möbelantrieb verbunden, wenn sich dieser in der im Möbel montierten Einbauposition befindet.

Sowohl der Reiter 134 mit dem verstellbareren Schaltnocken 135 als auch die Teppichschutzschiene 140 können auch bei den zuvor gezeigten Ausführungsbeispielen eingesetzt werden.

### Bezugszeichenliste

- 100: Führungsbahn

- 110: Führungsprofil
- 111: Nut zur Aufnahme der Zahnstange
- 112: Führungsnut
- 113: Laufbahn für Gegenlager
- 114: Anlagekante
- 115: Versteifungsrippe
- 116: Längsrippen
- 117: Stauböffnungen

- 120: Zahnstange

- 130: Befestigungsflansch
- 131: Befestigungsmittel
- 132: Schraube
- 133: Schaltnocken
- 134: Reiter
- 135: verstellbare Schaltnocken

- 140: Teppichschutzschiene

- 200: Abtriebseinheit

- 210: Gehäuse (Schieber)
- 211: Befestigungsmittel
- 212: weiteres Befestigungsmittel
- 213: umgreifender Abschnitt

- 220: Antriebsmotor
- 221: Schnecke
- 230: Antriebswelle
- 231: Schneckenzahnrad
- 232: Abtriebszahnrad
- 234: Lageraufnahme
- 235: Lagerzapfen
- 236: Gegenlager

- 240: Gehäuse (Getriebegehäuse)

- 250: Elektrischer Anschluss
- 251: Endschalter
- 252: Anschlussdeckel

## Patentansprüche

1. Elektromotorischer Möbelantrieb mit einer Führungsbahn (100) und einer sich entlang der Führungsbahn (100) bewegenden und diese zumindest teilweise umgreifenden Abtriebseinheit (200), wobei
- die Führungsbahn (100) eine Zahnstange (120) aufweist und
- die Abtriebseinheit (200) einen Antriebsmotor (220) mit einem Drehzahlreduziergetriebe und einem Abtriebszahnrad (232) aufweist, das sich im Eingriff mit der Zahnstange (120) der Führungsbahn (100) befindet, **dadurch gekennzeichnet, dass**
die Abtriebseinheit (200) Endschalter (251) aufweist, um eine Bewegung der Abtriebseinheit (200) über die Enden der Führungsbahn (100) hinaus zu verhindern.

2. Elektromotorischer Möbelantrieb nach Anspruch 1, bei dem die Führungsbahn (100) ein Führungsprofil (110) umfasst.

3. Elektromotorischer Möbelantrieb nach Anspruch 2, bei dem das Führungsprofil (110) eine insbesondere c-förmige Nut (111) zur Aufnahme der Zahnstange (120) aufweist.

4. Elektromotorischer Möbelantrieb nach Anspruch 2, bei dem die Zahnstange (120) einstückig mit dem Führungsprofil (110) ausgebildet ist.

5. Elektromotorischer Möbelantrieb nach Anspruch 3 oder 4, bei dem benachbart zur Zahnstange (120) eine Laufbahn (113) für ein Gegenlager (236) ausgebildet ist, das das Abtriebszahnrad (232) direkt oder indirekt lagert.

6. Elektromotorischer Möbelantrieb nach Anspruch 5, bei dem Zahnstange (120) entlang einer Seite der Laufbahn (113) verläuft und eine Anlagekante (114) für das Gegenlager (236) an einer der Zahnstange (120) gegenüberliegenden Seite der Laufbahn (113) ausgebildet ist.

7. Elektromotorischer Möbelantrieb nach einem der Ansprüche 1 bis 6, bei dem ein Lagerdorn an einem Gehäuse (210, 240) der Abtriebseinheit (200) festgelegt ist, durch den das Abtriebszahnrad (232) gelagert ist.

8. Elektromotorischer Möbelantrieb nach Anspruch 7, zurückbezogen auf Anspruch 5 oder 6, bei dem der Lagerdorn an einem Ende einstückig mit dem Gehäuse (210, 240) der Abtriebseinheit (200) ausgebildet ist und am anderen Ende mit dem Gegenlager (236) zusammenwirkt.

9. Elektromotorischer Möbelantrieb nach Anspruch 7, bei dem der Lagerdorn an beiden Ende in dem Gehäuse (210, 240) der Abtriebseinheit (200) festgelegt ist.

10. Elektromotorischer Möbelantrieb nach einem der Ansprüche 1 bis 8, bei dem die Abtriebseinheit (200) an mindestens einer, bevorzugt zwei gegenüberliegenden Seiten, Befestigungsmittel (211, 212) zur Befestigung mit einem Möbelteil oder einem Teil eines Möbelbeschlags aufweist.

11. Elektromotorischer Möbelantrieb nach einem der Ansprüche 1 bis 10, bei dem das Drehzahlreduziergetriebe ein Schneckengetriebe ist mit einer mit dem Antriebsmotor (220) verbundenen Schnecke (221) und einem mit dem Abtriebszahnrad (232) verbundenen Schneckenrad (231).

12. Elektromotorischer Möbelantrieb nach einem der Ansprüche 1 bis 11, bei dem zusätzlich zu den Endschaltern (251) Endanschläge vorgesehen sind, um eine Bewegung der Abtriebseinheit (200) über die Enden der Führungsbahn (100) hinaus zu verhindern.

13. Elektromotorischer Möbelantrieb nach einem der Ansprüche 1 bis 12, bei dem Schaltnocken (133, 135) zur Betätigung der Endschalter (251) an der Führungsbahn (100) angeordnet sind.

14. Elektromotorischer Möbelantrieb nach einem der Ansprüche 1 bis 13, bei dem zumindest einer der Schaltnocken (135) an einem entlang der Führungsbahn (100) verschiebbaren Reiter (134) angeordnet ist.

15. Elektromotorischer Möbelantrieb nach einem der Ansprüche 1 bis 14, aufweisend ein ansteckbares Teppichschutzschild (140), das den Möbelantrieb zumindest im Bereich eines Verschiebewegs der Abtriebseinheit (200) nach unten hin abschirmt.

## Claims

1. An electromotive furniture drive, comprising a guideway (100) and an output unit (200) which moves along the guideway (100) and which at least partly surrounds said guideway (100), wherein
- the guideway (100) comprises a gear rack (120), and
- the output unit (200) comprises a drive motor (220) with a speed-reducing mechanism and an output gear (232) which is in engagement with the gear rack (120) of the guideway (100),
**characterized in that**
the output unit (200) comprises limit switches (251) in order to prevent a movement of the output unit (200) beyond the ends of the guide track (100).

2. An electromotive furniture drive according to claim 1, wherein the guideway (100) comprises a guide profile (110).

3. An electromotive furniture drive according to claim 2, wherein the guide profile (110) comprises an especially c-shaped groove (111) for accommodating the gear rack (120).

4. An electromotive furniture drive according to claim 2, wherein the gear rack (120) is integrally formed with the guide profile (110).

5. An electromotive furniture drive according to claim 3 or 4, wherein a track (113) for a counter bearing (236) is arranged adjacent to the gear rack (120), said counter bearing mounting the output gear (232) directly or indirectly.

6. An electromotive furniture drive according to claim 5, wherein the gear rack (120) extends along one side of the track (113) and a contact edge (114) for the counter bearing (236) is arranged on a side of the track (113) which is opposite of the gear rack (120).

7. An electromotive furniture drive according to one of the claims 1 to 6, wherein a bearing pin is fixed to a housing (210, 240) of the drive unit (200), by means of which the output gear (232) is mounted.

8. An electromotive furniture drive according to claim 7, referring back to claim 5 or 6, wherein the bearing pin is formed at one end integrally with the housing (210, 240) of the output unit (200) and cooperates at the other end with the counter bearing (236).

9. An electromotive furniture drive according to claim 7, wherein the bearing pin is fixed at both ends in the housing (210, 240) of the output unit (200).

10. An electromotive furniture drive according to one of the claims 1 to 8, wherein the output unit (200) comprises fastening means (211, 212) on at least one side, preferably on two opposite sides, for fixing to a furniture part or a part of a furniture fitting.

11. An electromotive furniture drive according to one of the claims 1 to 10, wherein the speed-reducing mechanism is a worm gear, comprising a worm (221) connected to the drive motor (220) and a worm wheel (231) connected to the output gear (232).

12. An electromotive furniture drive according to one of the claims 1 to 11, wherein in addition to the limit switches (251) limit stops are provided in order to prevent a movement of the output unit (200) beyond the ends of the guide track (100).

13. An electromotive furniture drive according to claim 12, wherein switching cams (133, 135) are arranged on the guideway (100) for actuating the limit switches (251).

14. An electromotive furniture drive according to claim 13, wherein at least one of the switching cams (135) is arranged on a rider (134) which is displaceable along the guideway (100).

15. An electromotive furniture drive according to one of the claims 1 to 14, comprising an insertable carpet protection shield (140), which shields the furniture drive in the downward direction at least in the region of a path of displacement of the output unit (200).

## Revendications

1. Entraînement pour meuble à moteur électrique avec une piste de guidage (100) et une unité d'entraînement (200) qui se déplace le long de la piste de guidage (100) et entoure au moins partiellement celle-ci, dans lequel
- la piste de guidage (100) présente une crémaillère (120) et
- l'unité d'entraînement (200) présente un moteur d'entraînement (220) avec un engrenage réduisant la vitesse de rotation et une roue dentée de sortie (232) qui se trouve en prise avec la crémaillère (120) de la piste de guidage (100),
**caractérisé en ce que** l'unité d'entraînement (200) présente des commutateurs de fin de course (251) afin d'empêcher l'unité d'entraînement (200) de se déplacer au-delà des extrémités de la piste de guidage (100).

2. Entraînement pour meubles à moteur électrique selon la revendication 1, dans lequel la piste de guidage (100) comprend un profilé de guidage (110).

3. Entraînement pour meubles à moteur électrique selon la revendication 2, dans lequel le profilé de guidage (110) présente une gorge (111), en particulier en forme de C, pour recevoir la crémaillère (120).

4. Entraînement pour meubles à moteur électrique selon la revendication 2, dans lequel la crémaillère (120) est formée d'un seul tenant avec le profilé de guidage (110).

5. Entraînement pour meubles à moteur électrique selon la revendication 3 ou 4, dans lequel est formée au voisinage de la crémaillère (120) une piste de passage (113) pour un contre-appui (236) qui supporte directement ou indirectement la roue dentée de sortie (232).

6. Entraînement pour meubles à moteur électrique selon la revendication 5, dans lequel la crémaillère (120) passe le long d'un côté de la piste de passage (113) et un bord d'appui (114) pour le contre-appui (236) est formé sur un côté de la piste de passage (113) faisant face à la crémaillère (120).

7. Entraînement pour meubles à moteur électrique selon l'une des revendications 1 à 6, dans lequel un mandrin de support est fixé sur un boîtier (210, 240) de l'unité d'entraînement (200) et supporte la roue dentée de sortie (232).

8. Entraînement pour meubles à moteur électrique selon la revendication 7, faisant référence à la revendication 5 ou 6, dans lequel le mandrin de support est formé d'un seul tenant avec le boîtier (210, 240) de l'unité d'entraînement (200) à une extrémité et coopère avec le contre-appui (236) à l'autre extrémité.

9. Entraînement pour meubles à moteur électrique selon la revendication 7, dans lequel le mandrin de support est fixé aux deux extrémités dans le boîtier (210, 240) de l'unité d'entraînement (200).

10. Entraînement pour meubles à moteur électrique selon l'une des revendications 1 à 8, dans lequel l'unité d'entraînement (200) présente sur au moins un côté, de préférence sur deux côtés opposés, des moyens de fixation (211, 212) pour la fixation à une partie de meuble ou à une partie d'une ferrure de meuble.

11. Entraînement pour meubles à moteur électrique selon l'une des revendications 1 à 10, dans lequel l'engrenage réduisant la vitesse de rotation est un engrenage à vis sans fin avec une vis sans fin (221) reliée au moteur d'entraînement (220) et avec une roue hélicoïdale (231) reliée à la roue dentée de sortie (232).

12. Entraînement pour meubles à moteur électrique selon l'une des revendications 1 à 11, dans lequel des butées de fin de course sont prévues en plus des commutateurs de fin de course (251) pour empêcher l'unité d'entraînement (200) de se déplacer au-delà des extrémités de la piste de guidage (100).

13. Entraînement pour meubles à moteur électrique selon l'une des revendications 1 à 12, dans lequel des cames de commutation (133, 135) destinées à actionner les commutateurs de fin de course (251) sont disposées sur la piste de guidage (100).

14. Entraînement pour meubles à moteur électrique selon l'une des revendications 1 à 13, dans lequel au moins une des cames de commutation (135) est disposée sur une traverse (134) capable de translation le long de la piste de guidage (100).

15. Entraînement pour meubles à moteur électrique selon l'une des revendications 1 à 14, présentant une plaque de protection de tapis (140) qui isole l'entraînement de meuble vers le bas au moins dans la zone d'un trajet de translation de l'unité d'entraînement (200).
